Europäisches Patentamt

European Patent Office

Office européen des brevets

(11) Numéro de publication: **0 334 750**
**A1**

## (12) DEMANDE DE BREVET EUROPEEN

(21) Numéro de dépôt: 89400792.1

(22) Date de dépôt: 21.03.89

(51) Int. Cl.⁴: **H 01 J 47/02**
**A 61 B 6/03**

(30) Priorité: 23.03.88 FR 8803796

(43) Date de publication de la demande:
27.09.89 Bulletin 89/39

(84) Etats contractants désignés: **DE GB NL**

(71) Demandeur: **COMMISSARIAT A L'ENERGIE ATOMIQUE**
**31/33, rue de la Fédération**
**F-75015 Paris (FR)**

(72) Inventeur: **Allemand, Robert**
**Chemin de Bouffière**
**38330 Saint Ismier (FR)**

**Drouet, Martine**
**4 Allée Boris Vian**
**93380 Pierrefitte (FR)**

**Pleyber, Gaétan**
**49 rue de la République**
**38420 Domene (FR)**

**Tournier, Edmond**
**2 Place Docteur Léon Martin**
**38000 Grenoble (FR)**

(74) Mandataire: **Mongrédien, André et al**
**c/o BREVATOME 25, rue de Ponthieu**
**F-75008 Paris (FR)**

(54) Ensemble de détection pour tomographie à rayonnements ionisants.

(57) L'invention concerne un ensemble de détection pour tomographie par rayonnements ionisants, pour obtenir l'image d'au moins une coupe d'un objet ou d'un organe. Ce dispositif comporte au moins une chambre (1) munie d'une fenêtre d'entrée (2) transparente aux rayonnements, et dans cette chambre un empilement (E1) de détection comportant une plaque conductrice (3) de polarisation, parallèle au plan de coupe et une série d'électrodes identiques (5) parallèles au plan de coupe. Selon l'invention, une entretoise isolante (9) est disposée entre les électrodes (2) et la plaque (5) et comporte, en regard de la fenêtre, au moins une plaque intermédiaire (14) opaque aux rayonnements et parallèle au plan de coupe. Cette plaque intermédiaire (14), les électrodes (5) et la plaque de polarisation (3) sont des éléments perturbateurs qui, séparés d'une distance d permettent de supprimer des artéfacts pour des inclusions linéaires ou quasi linéaires dans l'objet.
Application notamment à la tomographie par rayons X.

FIG. 1

EP 0 334 750 A1

**Description**

## ENSEMBLE DE DETECTION POUR TOMOGRAPHIE A RAYONNEMENTS IONISANTS

La présente invention concerne un ensemble de détection pour tomographie à rayonnements ionisants tels que des rayons X.

Cette invention s'applique à l'obtention d'images de coupes d'un objet ou d'un organe et notamment d'images dans lesquelles les perturbations dues aux électrodes et aux plaques de polarisation utilisées, sont supprimées. L'ensemble de détection de l'invention peut être utilisé en radiographie, la radiographie étant un cas simplifié de la tomographie.

On connaît un ensemble de détection pour tomographie à rayons X tel que celui qui est décrit par exemple dans le brevet français n° 2 504 278, dont la demande a été déposée le 15 avril 1981 au nom du même demandeur.

Cet ensemble de détection permet d'obtenir l'image d'au moins une coupe d'un objet ou d'un organe, en détectant les rayons X ayant traversé l'objet ou l'organe dans au moins un plan de coupe. Il comporte au moins une chambre étanche contenant un gaz ionisable, cette chambre étant munie d'une fenêtre d'entrée transparente aux rayons X provenant de l'organe ou de l'objet. L'intérieur de la chambre contient au moins un empilement de détection qui comprend une plaque conductrice plane de polarisation, disposée sur un support isolant parallèle au plan de coupe, et une série d'électrodes identiques, conductrices et planes, isolées entre elles et disposées sur un support plan isolant parallèle au plan de coupe. Ces électrodes s'étendent dans une direction longitudinale, en direction de l'objet. Une entretoise isolante transparente aux rayons X est disposée entre la plaque et les électrodes ; cette entretoise comporte une partie avant située en regard de la fenêtre. Chaque volume compris entre chaque électrode et une portion de surface de la plaque de polarisation, en regard de cette électrode, définit une cellule de détection. Chaque cellule est caractérisée par son pas p voisin de la largeur de l'électrode dans un plan perpendiculaire à la direction longitudinale, et par sa hauteur e égale à la distance séparant le plan des électrodes et la plaque de polarisation.

Des connexions permettent de relier les électrodes à un premier potentiel (une masse de référence par exemple), par l'intermédiaire de moyens de mesure des courants circulant dans ces électrodes, lors de l'ionisation du gaz par les rayons X dans les cellules de détection. Une autre connexion permet de relier la plaque à une source de haute tension, positive par exemple.

L'image de chaque coupe obtenue à partir du traitement de signaux fournis par l'ensemble de détection décrit dans le brevet précité est d'assez bonne qualité mais présente cependant des imperfections (artéfacts) dues aux perturbations de l'ionisation du gaz sur les électrodes et la plaque de polarisation et au voisinage de celles-ci. On appelle artéfact un détail fictif de l'image qui peut résulter, soit du traitement des signaux de mesure issus de l'ensemble de détection, soit des effets perturbateurs créés par les électrodes et la plaque de polarisation, dans l'ionisation du gaz.

Ces artéfacts sont très gênants notamment lorsque l'objet ou l'organe comporte des inclusions telles que des lames minces ou des tubes (correspondant par exemple à des vaisseaux sanguins), fortement inclinées par rapport au plan de coupe. L'ensemble de détection décrit dans le brevet précité ne permet pas d'éliminer les artéfacts associés à de telles inclusions et notamment ceux qui résultent des perturbations dans l'ionisation du gaz sur les électrodes et les plaques de polarisation, et au voisinage de celles-ci.

L'invention a pour but de remédier à ces inconvénients et notamment de fournir un ensemble de détection pour tomographie à rayonnements ionisants, qui permet d'éliminer dans l'image d'une coupe d'un objet ou d'un organe, les artéfacts qui ordinairement apparaissent lorsque cet objet ou cet organe contiennent des inclusions fortement inclinées par rapport au plan de coupe ; ces artéfacts sont dus, comme indiqué plus haut, aux perturbations de l'ionisation du matériau ionisable sur les électrodes et les plaques de polarisation, et au voisinage de celles-ci.

L'invention a pour objet un ensemble de détection pour tomographie à rayonnements ionisants, pour obtenir l'image d'au moins une coupe d'un objet ou d'un organe en détectant les rayonnements ionisants ayant traversé l'objet ou l'organe dans au moins un plan de coupe, comportant au moins un empilement de détection comprenant une plaque conductrice plane de polarisation parallèle au plan de coupe, une série d'électrodes identiques, conductrices et planes, isolées entre elles et parallèles au plan de coupe, ces électrodes s'étendant dans une direction longitudinale, en direction de l'objet, et un matériau ionisable présent entre la plaque et les électrodes, chaque volume compris entre chaque électrode et une portion de surface de la plaque de polarisation en regard de cette électrode définissant une cellule de détection, chaque cellule étant définie par son pas p voisin de la largeur de l'électrode dans un plan perpendiculaire à la direction longitudinale et par sa hauteur e égale à la distance séparant l'électrode et la plaque de polarisation, caractérisé en ce que pour un objet ou un organe comportant une ou plusieurs inclusions ayant des projections sur l'empilement, dans un plan perpendiculaire à la direction longitudinale des électrodes, ces projections étant linéaires ou quasi linéaires et inclinées par rapport au plan des électrodes, si $\alpha$ désigne le plus petit angle d'inclinaison de ces projections au-dessus duquel un artéfact dû aux éléments perturbateurs de l'empilement doit être supprimé, les éléments perturbateurs comprenant au moins la plaque de polarisation et les électrodes, si d désigne la plus petite distance séparant deux éléments perturbateurs successifs, la distance d est choisie pour être inférieure ou égale à $2p.tg\alpha$, ce choix évitant les effets perturbateurs desdits éléments.

Le matériau ionisable de l'invention peut être par exemple un gaz ou un solide du type semi-conducteur.

Selon une autre caractéristique de l'invention, les éléments perturbateurs successifs de l'empilement étant associés à la plaque de polarisation et aux électrodes, la distance d est égale à la hauteur e entre les électrodes et la plaque de polarisation.

Selon un mode de réalisation de l'invention, le matériau ionisable étant un gaz, l'empilement est situé dans une chambre étanche munie d'une fenêtre d'entrée transparente aux rayonnements ionisants provenant de l'organe ou de l'objet, la plaque de polarisation et les électrodes sont disposées sur des supports isolants distincts, une entretoise isolante transparente aux rayonnements ionisants étant disposée entre la plaque et les électrodes, ladite entretoise présentant au moins une partie en regard de la fenêtre.

Dans ce cas, l'élément perturbateur de l'empilement associé à la plaque de polarisation est constitué par ladite plaque, le support isolant sur lequel elle est disposée et éventuellement la plaque de polarisation de l'empilement adjacent. De même, l'élément perturbateur associé aux électrodes est constitué par lesdites électrodes, le support isolant sur lequel elles sont disposées et éventuellement les électrodes de l'empilement adjacent.

De façon avantageuse, la partie d'entretoise en regard de la fenêtre comporte au moins une plaque intermédiaire opaque aux rayonnements ionisants parallèle au plan de coupe, ladite plaque faisant partie des éléments perturbateurs de l'empilement.

Selon une autre caractéristique de l'invention, les éléments perturbateurs de l'empilement ont la même épaisseur.

Selon une autre caractéristique, la plaque intermédiaire est disposée à mi-distance des électrodes et de la plaque de polarisation.

Selon une autre caractéristique, la partie d'entretoise en regard de la fenêtre comporte m plaques intermédiaires opaques aux rayonnements ionisants, parallèles au plan de coupe, ces plaques faisant partie des éléments perturbateurs de l'empilement et divisant l'entretoise en m + 1 intervalles égaux, de sorte que :

$$d = \frac{e}{m+1} \quad \text{et} \quad \alpha m = \text{Arctg} \frac{e}{2p(m+1)},$$

αm désignant l'angle d'inclinaison limite au-dessus duquel les artéfacts sont supprimés lorsque l'entretoise comporte m plaques intermédiaires, l'introduction des m plaques intermédiaires permettant de réduire le domaine d'apparition d'un artéfact, du domaine angulaire (O,Arctg(e/2p)) au domaine angulaire (O,Arctg(e/2p(m+1))).

Selon une autre caractéristique, les électrodes et la plaque de polarisation sont constituées respectivement par des dépôts conducteurs de très faible épaisseur sur les supports isolants correspondants.

Selon une autre caractéristique, les supports isolants des électrodes et de la plaque sont souples, la chambre contenant des moyens de traction pour tendre ces supports parallèlement au plan de coupe.

Les caractéristiques et avantages de l'invention ressortiront mieux de la description qui va suivre, donnée en référence aux dessins annexés dans lesquels :

- la figure 1 représente schématiquement et en perspective un exemple d'un ensemble de détection conforme à l'invention,

- la figure 2 est un diagramme représentant la fonction transverse de sensibilité d'un ensemble de détection, en fonction de la distance à laquelle se produit l'ionisation, par rapport aux électrodes et à la plaque de polarisation,

- la figure 3 représente schématiquement un ensemble de détection conforme à l'invention, vu du côté de la fenêtre d'entrée de celui-ci. Cette figure permet de mieux comprendre le choix de l'écartement entre les éléments perturbateurs,

- la figure 4 est un diagramme représentant la fonction transverse de sensibilité, pour un ensemble de détection dans lequel on suppose que l'épaisseur des électrodes, de la plaque de polarisation et des supports sur lesquels elles sont disposées est quasiment nulle,

- la figure 5 représente schématiquement et en perspective certains des moyens utilisés dans l'ensemble de détection de l'invention, pour positionner les électrodes et les plaques de polarisation dans la chambre.

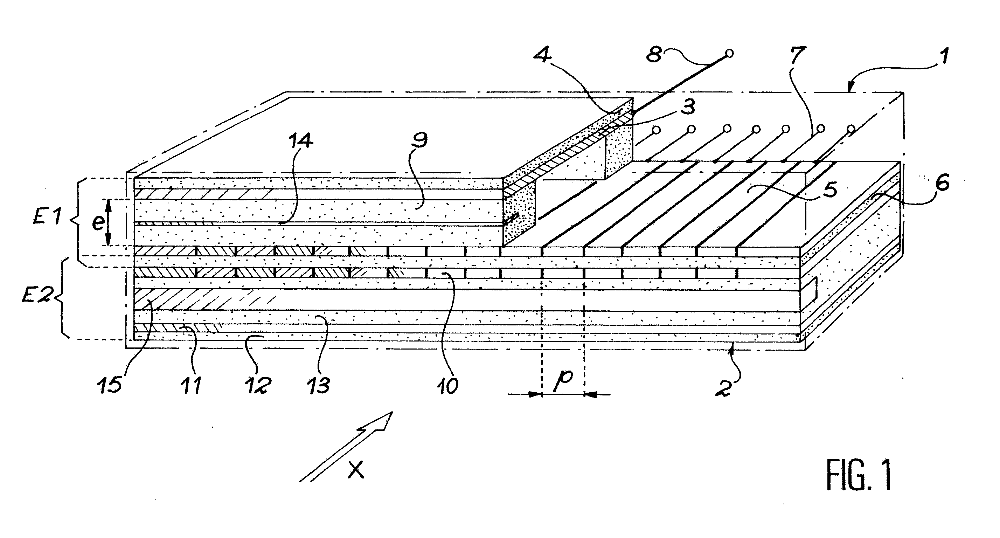

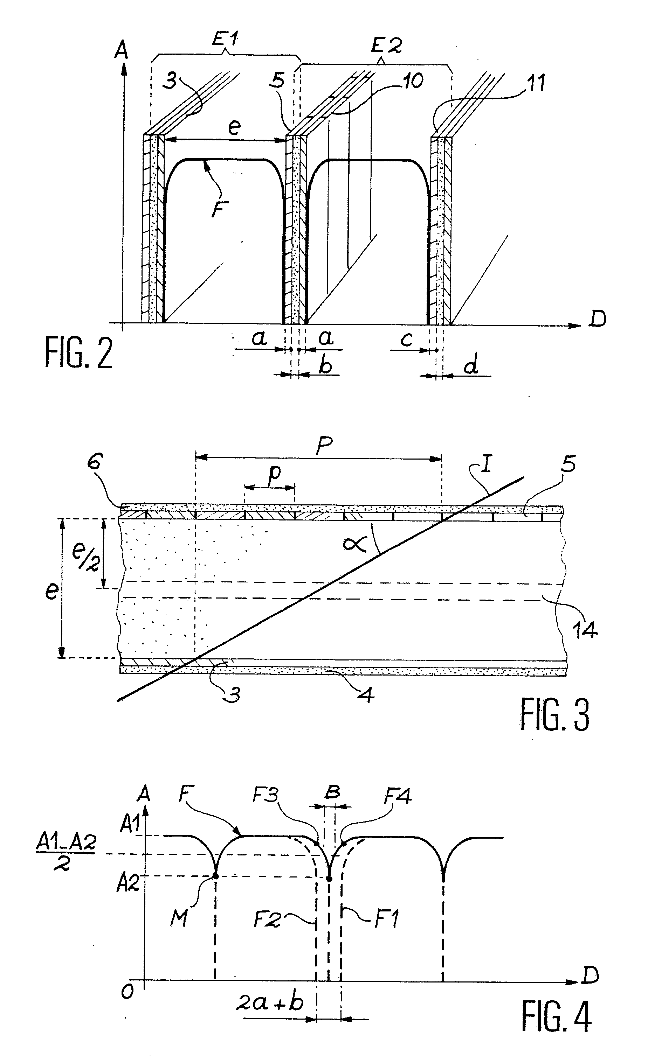

L'ensemble de détection représenté schématiquement, en perspective et en coupe partielle sur la figure 1 permet d'obtenir l'image d'au moins une coupe d'un objet ou d'un organe, en détectant les rayonnements ionisants ayant traversé cet objet ou cet organe dans un plan de coupe. Dans le reste de la description, on prendra comme rayonnements ionisants l'exemple des rayons X.

Cet ensemble comporte au moins une chambre étanche 1 contenant un gaz ionisable. Elle est munie d'une fenêtre d'entrée 2 transparente aux rayons X provenant de l'organe ou de l'objet. La chambre 1 et la fenêtre 2 n'ont pas été représentées en détail sur la figure.

L'intérieur de la chambre 1 comporte au moins un empilement de détection E1 comprenant une plaque conductrice plane 3 de polarisation, disposée sur un support isolant 4 parallèle au plan de coupe.

L'empilement E1 comporte aussi une série d'électrodes identiques conductrices et planes 5, isolées entre elles et disposées sur un support isolant 6, parallèle au plan de coupe. Ces électrodes s'étendent dans une direction longitudinale dirigée vers l'objet ; elles peuvent être formées par exemple par dépôt de cuivre sur le support isolant 6 constitué de verre époxy. La plaque de polarisation 3 peut elle-même être formée par

3

exemple par un dépôt de cuivre sur le support isolant 4 en verre époxy. Les électrodes 5 sont reliées par des connexions 7 à un potentiel de référence (de préférence, une masse de référence) par l'intermédiaire de moyens de mesure des valeurs de courants circulant dans les électrodes et la plaque de polarisation 3 est reliée par la connexion 8 à une source de tension continue, par exemple positive, non représentée sur cette figure. Chaque empilement forme une pluralité de cellules de détection. Une cellule de détection est définie par le volume compris entre une électrode et une portion de surface de la plaque de polarisation, en regard de cette électrode. Lors de l'ionisation du gaz par les rayons X, dans la cellule de détection, des courants circulent dans les électrodes 5 et sont mesurés par les moyens (non représentés) de mesure ces moyens de mesure sont eux-mêmes reliés à des moyens de traitement (non représentés) qui traitent les valeurs mesurées pour obtenir l'image de la coupe de l'objet ou de l'organe sur un écran de visualisation. Ces moyens de mesure et de traitement ne font pas partie de l'objet de l'invention.

L'empilement E1 comporte aussi une entretoise isolante 9 transparente aux rayons X, disposée entre la plaque de polarisation 3 et les électrodes 5. Cette entretoise isolante a la forme d'un cadre.

Chaque cellule de détection est définie par son pas p qui est sensiblement égal à la largeur de l'électrode dans un plan perpendiculaire à la direction longitudinale de cette électrode. Cette cellule est aussi définie par sa hauteur e qui est égale à la distance séparant l'électrode de la plaque de polarisation 3.

On a également représenté sur cette figure un empilement E2, semblable à l'empilement E1 et comportant des électrodes 10 disposées sur une autre face du support isolant 6, une plaque de polarisation 11 déposée sur un support isolant 12, et une entretoise isolante 13.

Selon l'invention et pour des raisons qui seront décrites plus loin en détail, la partie d'entretoise de chaque empilement, située en regard de la fenêtre 2, comporte de façon avantageuse au moins une plaque opaque aux rayons X plane intermédiaire, parallèle au plan de coupe. Cette plaque opaque peut être par exemple une plaque de cuivre 14 insérée dans l'entretoise 9. Une plaque intermédiaire 15 est également insérée dans l'entretoise 13 de l'empilement E2. Cette plaque intermédiaire permet, comme on le verra plus loin en détail, de supprimer les artéfacts pour des angles d'inclinaison supérieurs ou égaux à arctg(d/2p).

La figure 2 permet de mieux comprendre les perturbations de l'ionisation du gaz dues aux électrodes et à la plaque de polarisation. Cette figure représente un diagramme F qui donne les variations de l'amplitude A du courant que l'on peut recueillir sur chaque électrode, en fonction de la distance D à laquelle se produit l'ionisation du gaz, par rapport à l'électrode considérée et à la plaque de polarisation, dans chacun des empilements E1, E2. Ces empilements sont représentés schématiquement et en perspective sur la figure, pour en faciliter la compréhension. La fonction représentée par le diagramme F peut être qualifiée de fonction transverse de sensibilité de l'ensemble de détection. On observe sur ce diagramme que la sensibilité ou amplitude A du courant fourni par une électrode 5 ou 10, augmente lorsque l'ionisation se produit à distance de l'électrode ou de la plaque de polarisation correspondante (3 ou 11). Cette amplitude décroît lorsque l'ionisation se produit au voisinage de chaque électrode ou de chaque plaque de polarisation. Elle est nulle lorsque l'ionisation se produit sur une électrode ou sur une plaque de polarisation.

Il en résulte une perte de sensibilité importante de l'ensemble de détection, lorsque l'ionisation des molécules de gaz par les rayons X provenant de l'objet, se produit sur les électrodes et les plaques de polarisation ou au voisinage de celles-ci. Cette perturbation due aux électrodes et aux plaques de polarisation provoque des perturbations ou artéfacts mentionnés plus haut, dans l'image de la coupe de l'objet, obtenue après traitement des valeurs des courants mesurés pour les différentes électrodes. Ces artéfacts ou perturbations dus aux électrodes et aux plaques de polarisation, sont très importants lorsque l'objet ou l'organe dont on souhaite obtenir l'image d'une coupe, contient des lames ou des tubes ou, d'une manière générale, des inclusions dont les projections sur un plan perpendiculaire à la direction longitudinale des électrodes peuvent prendre une forme linéaire ou quasi linéaire, fortement inclinées par rapport au plan de coupe. On réalise d'ailleurs sur cette figure que l'importance de la perturbation de la fonction transverse de sensibilité de l'ensemble de détection est accrue par les épaisseurs respectives a et c des électrodes et des plaques de polarisation, ainsi que par les épaisseurs respectives b et d des supports isolants de ces électrodes et de ces plaques.

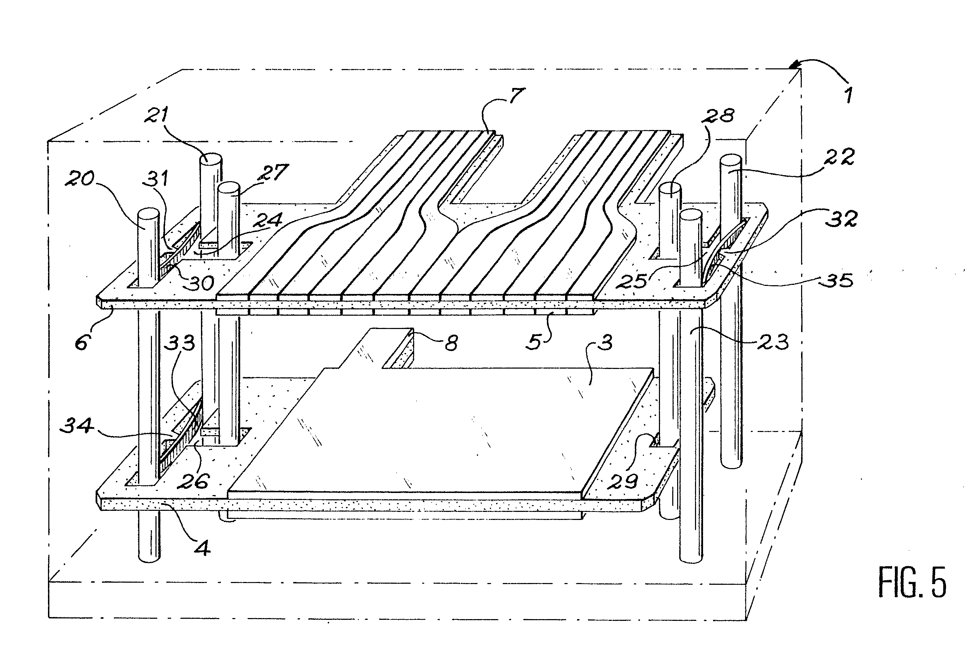

La figure 3 permet de mieux comprendre le choix qui est fait, selon l'invention, dans l'espacement e entre la plaque de polarisation 3 et les électrodes de mesure 5 d'un empilement de détection, en relation avec le pas p de chaque cellule de détection ce choix permet d'éviter l'apparition d'artéfacts dans l'image d'une coupe d'un objet ou d'un organe, lorsque celui-ci présente des inclusions de projections linéaires ou quasi linéaires fortement inclinées par rapport au plan de coupe.

Sur cette figure qui représente schématiquement un ensemble de détection, en coupe transversale, on a représenté par une droite I, la projection d'un plan passant par une inclusion plane ou quasi plane contenue dans un objet, ce plan étant supposé perpendiculaire à la face avant du détecteur, elle-même perpendiculaire au plan de coupe. La droite I est en fait la projection sur le plan perpendiculaire au plan de coupe et perpendiculaire à la direction longitudinale des électrodes, de l'inclusion contenue dans l'objet ou l'organe à étudier. On désigne par $\alpha$ l'inclinaison de la droite I par rapport au plan des électrodes 5, c'est-à-dire par rapport au plan de coupe.

Chaque franchissement par la ligne I d'un élément perturbateur de l'empilement correspond à un défaut de l'image. Lorsque les éléments perturbateurs correspondent par exemple uniquement à ceux associés aux électrodes 5 et à la plaque de polarisation 3, l'image de l'inclusion plane ou quasi plane correspondante comporte deux défauts qui sont les artéfacts respectivement dus à une électrode et à la plaque de polarisation. Ces défauts se traduisent par exemple dans le cas d'une lame, par des traits et dans le cas d'un tube, par des rétrécissements. L'écartement P entre les projections sur un plan parallèle au plan de coupe, des intersections de la ligne I avec les électrodes et la plaque de polarisation, est égal à $e/tg\alpha$. Le nombre de cellules de détection de pas p qui participent à la formation de l'image de l'inclusion, pour l'empilement considéré est égal à n, de sorte que P est voisin de n.p.

La figure montre que $e = p.tg\alpha$ et on en déduit que $\alpha = Arctg(e/P)$. Une étude expérimentale montre que pour une inclusion plane ou quasi plane, les artéfacts dans l'image de ces inclusions, dus aux éléments perturbateurs associés aux électrodes et à la plaque de polarisation, n'apparaissent que si la projection I de ces inclusions est inclinée par rapport au plan de coupe, d'un angle $\alpha$ inférieur à Arctg e/2p, ce qui revient à dire que l'artéfact ne se produit pas lorsque $\alpha >$ Arctg e/2p ou encore lorsque $e \leqq 2p.tg \leqq$.

Il en résulte que pour un ensemble de détection dont les électrodes et la plaque de polarisation sont espacées d'une distance e, il est possible de réduire le domaine d'apparition d'artéfacts, en plaçant un ou plusieurs éléments perturbateurs supplémentaires, tels que des plaques intermédiaires, qui divisent l'espace entre les électrodes 5 et la plaque 3 en intervalles égaux. Ces éléments perturbateurs sont des plaques intermédiaires, opaques aux rayonnements ionisants, parallèles au plan de coupe, situées dans l'entretoise isolante 9, en regard de la fenêtre d'entrée.

Dans un mode particulier de réalisation, une seule plaque intermédiaire 14 (voir figure 1), est disposée à mi-distance entre les électrodes 5 et la plaque de polarisation 3. Une seule plaque intermédiaire 14 est aussi représentée en traits interrompus sur la figure 3.

Si l'on utilise m plaques intermédiaires, ces plaques divisent l'espace entre les électrodes 5 et la plaque 3 en $m+1$ intervalles égaux. Pour que les artéfacts dus aux éléments perturbateurs (plaque-électrodes-plaques intermédiaires) n'apparaissent pas, il est nécessaire que l'angle d'inclinaison de la projection d'une inclusion, soit supérieur ou égal à un angle :

$$\alpha_m = Arctg \frac{e}{2p(m+1)} \quad avec \quad d = (e/m+1)$$

Sans plaque intermédiaire, il est nécessaire que cet angle d'inclinaison soit supérieur ou égal à un angle :

$$\alpha_0 = Arctg \frac{e}{2p} \quad avec \quad d = e$$

La relation $\alpha_m > \alpha_0$ montre l'avantage apporté par l'utilisation de plaques intermédiaires, d représentant la distance de deux éléments perturbateurs successifs et $\alpha_m$, $\alpha_0$ les angles limites d'inclinaison.

La figure 4 permet de mieux comprendre l'importance du choix d'une très faible épaisseur des électrodes et des plaques de polarisation dans l'ensemble de détection. Cette figure représente la fonction transverse en sensibilité de deux empilements de détection, pour lesquels on suppose que les électrodes, les plaques de polarisation et les supports sur lesquels elles sont disposées présentent une épaisseur quasiment nulle. On voit que dans ce cas l'amplitude A de la fonction transverse F varie entre un palier d'amplitude maximum A1 et un minimum M d'amplitude A2. Dans le cas où les électrodes et leur support isolant présentent une épaisseur égale à $2a+b$, la fonction transverse, comme représentée par les traits interrompus F1, F2 présente un minimum d'amplitude nulle. Il en résulte que plus les électrodes ou la plaque de polarisation sont épaisses, plus les perturbations de la fonction transverse sont importantes ; ceci se traduit par des artéfacts importants dans l'image d'une coupe d'un objet. Il est donc indispensable de choisir des épaisseurs d'électrodes, de plaques de polarisation et de supports de ces électrodes et de ces plaques, aussi faibles que possible. L'expérience montre que cette épaisseur peut être voisine de la distance B. Cette distance est en fait la distance qui sépare les portions F3, F4, de la fonction transverse F au voisinage d'électrodes ou de plaques de polarisation d'épaisseur quasiment nulle, pour une amplitude (A1-A2)/2, voisine de la moitié de la différence d'amplitude entre le palier A1 de la fonction transverse et le minimum A2 de cette fonction. En pratique, l'épaisseur des électrodes, des plaques de polarisation et des supports isolants de ces électrodes et de ces plaques, sera voisine de quelques dixièmes de millimètres. Les supports isolants sont avantageusement réalisés en verre époxy tandis que les plaques de polarisation et les électrodes sont constituées par des dépôts de cuivre sur ces supports isolants, par exemple selon les techniques des circuits imprimés.

La figure 5 représente schématiquement et en perspective un empilement de détection conforme à l'invention, à l'intérieur de la chambre d'ionisation 1. Les mêmes éléments portent les mêmes références sur cette figure et sur la figure 1. On n'a pas représenté sur cette figure l'entretoise isolante et la plaque intermédiaire.

Comme indiqué plus haut, les électrodes 5 et la plaque de polarisation 3, sont constituées respectivement par des dépôts de cuivre sur des supports isolants souples 6, 4 de verre époxy. On a également représenté sur cette figure des bandes de connexion, telles que 7 et 8, des électrodes et de la plaque de polarisation avec des sources de tension et des moyens de mesure extérieurs à l'enceinte 1. Les électrodes et la plaque de polarisation ainsi que leurs supports respectifs sont de très faible épaisseur. L'obtention d'une bonne qualité d'image d'une coupe nécessite une planéité rigoureuse des supports d'électrodes et de plaques de polarisation. A cet effet, selon l'invention, des moyens sont prévus à l'intérieur de la chambre d'ionisation 1 pour tendre les supports 6, 4 parallèlement au plan de coupe. Ces moyens sont constitués par exemple, par des pions 20, 21, 22, 23 solidaires de la chambre 1 et traversant des lumières 24, 25 du support 6 des électrodes, et une lumière 26 du support 4 de la plaque de polarisation 3. Des pions de centrage 27, 28 traversent aussi respectivement, les lumières 24, 25 du support 6 des électrodes 5. Ces pions de centrage traversent aussi respectivement la lumière 26 du support 4 de la plaque 3, ainsi qu'une lumière 29 de ce support. Les pions de fixation 20, 21, 22, 23 du support isolant 6 coopèrent avec une lame élastique telle que 30, sur laquelle prend appui une languette 31 de la lumière 24 pour provoquer une traction mécanique sur le support 6. De la même manière, une lame élastique 35 provoque un effet de traction sur le support 6 en prenant appui sur les pions 22, 23 et sur la languette 32.

Une lame élastique 33 provoque la traction du support 4 en prenant appui sur les pions 20, 21 et sur la languette 34. Il n'est pas nécessaire, pour le support 4 de la plaque 3, d'effectuer une traction opposée à l'aide des pions 22, 23 si bien que le pion de centrage 28 qui traverse la lumière 29 du support 4, sert également de pion de maintien en position de ce support.

Les tractions opposées du support 6 permettent de centrer les électrodes dans l'ensemble de détection. Ce centrage étant inutile pour la plaque de polarisation, le support 4 peut être positionné aussi bien par une simple traction que par une double traction du type de celle du support 6.

## Revendications

1. Ensemble de détection pour tomographie par rayonnements ionisants, pour obtenir l'image d'au moins une coupe d'un objet ou d'un organe en détectant des rayons ionisants ayant traversé l'objet ou l'organe dans au moins un plan de coupe comportant au moins un empilement (E1) de détection comprenant une plaque conductrice (3) plane de polarisation parallèle au plan de coupe, une série d'électrodes identiques (5), conductrices et planes, isolées entre elles et parallèles au plan de coupe, ces électrodes s'étendant dans une direction longitudinale, en direction de l'objet, et un matériau ionisable entre la plaque (3) et les électrodes (5), chaque volume compris entre chaque électrode (5) et une portion de surface de la plaque de polarisation (3), en regard de cette électrode définissant une cellule de détection, chaque cellule étant définie par son pas p voisin de la largeur de l'électrode, dans un plan perpendiculaire à la direction longitudinale, et par sa hauteur e égale à la distance séparant l'électrode et la plaque de polarisation, caractérisé en ce que pour un objet ou un organe comportant une ou plusieurs inclusions ayant des projections sur l'empilement, dans un plan perpendiculaire à la direction longitudinale des électrodes, ces projections étant linéaires ou quasi linéaires et inclinées par rapport au plan des électrodes, si $\alpha$ désigne le plus petit angle d'inclinaison de ces projections au-dessus duquel un artéfact dû aux éléments perturbateurs de l'empilement doit être supprimé, les éléments perturbateurs comprenant au moins la plaque de polarisation et les électrodes, si d désigne la plus petite distance séparant deux éléments perturbateurs successifs, la distance d est choisie pour être inférieure ou égale à $2p.tg\alpha$, ce choix évitant les effets perturbateurs desdits éléments.

2. Dispositif selon la revendication 1, caractérisé en ce que les éléments perturbateurs successifs de l'empilement sont associés aux électrodes et à la plaque de polarisation, la distance d des éléments perturbateurs étant égale à la hauteur e entre les électrodes et la plaque de polarisation.

3. Dispositif selon la revendication 1, caractérisé en ce que le matériau ionisable est un gaz, l'empilement est situé dans une chambre étanche munie d'une fenêtre d'entrée transparente aux rayonnements ionisants provenant de l'organe ou de l'objet, les électrodes (5) et la plaque de polarisation (3) sont disposées sur des supports isolants distincts (4, 6), une entretoise isolante (9) transparente aux rayonnements ionisants étant disposée entre la plaque de polarisation (3) et les électrodes (5), cette entretoise présentant au moins une partie en regard de la fenêtre d'entrée (2).

4. Dispositif selon la revendication 3, caractérisé en ce que la partie de ladite entretoise en regard de la fenêtre (2) comporte au moins une plaque intermédiaire (14) opaque aux rayonnements ionisants, parallèle au plan de coupe, ladite plaque appartenant auxdits éléments perturbateurs de l'empilement.

5. Dispositif selon la revendication 4, caractérisé en ce que la plaque intermédiaire (14) est située à mi-distance des électrodes (5) et de la plaque de polarisation (3).

6. Dispositif selon la revendication 3, caractérisé en ce que la partie d'entretoise (9) en regard de la fenêtre (2) comporte m plaques intermédiaires opaques aux rayonnements ionisants, parallèles au plan de coupe, ces plaques faisant partie des éléments perturbateurs de l'empilement et divisant l'entretoise en $m+1$ intervalles égaux, de sorte que :

$$d = \frac{e}{m+1} \quad et \quad \alpha_m = Arctg \frac{e}{2p(m+1)},$$

$\alpha_m$ désignant l'angle d'inclinaison limite au-dessus duquel les artéfacts sont supprimés lorsque l'entretoise comporte m plaques intermédiaires, l'introduction des m plaques intermédiaires permettant de réduire le domaine d'apparition d'un artéfact, du domaine angulaire (0,Arctg(e/2p)) au domaine angulaire 0,Arctg (e/2p(m + 1))).

7. Dispositif selon l'une quelconque des revendications 1 à 6, caractérisé en ce que les éléments perturbateurs de l'empilement ont la même épaisseur.

8. Ensemble de détection selon la revendication 3, caractérisé en ce que les électrodes et la plaque de polarisation sont constituées respectivement par des dépôts conducteurs de très faible épaisseur sur les supports isolants correspondants.

9. Ensembl de détection selon la revendication 8, caractérisé en ce que les supports isolants (4, 6) des électrodes (5) et de la plaque (3) sont souples, la chambre (1) contenant des moyens de traction pour tendre ces supports parallèlement au plan de coupe.

FIG. 1

EP 0 334 750 A1

FIG. 2

FIG. 3

FIG. 4

FIG. 5

EP 0 334 750 A1

Office européen
des brevets

**RAPPORT DE RECHERCHE EUROPEENNE**

Numero de la demande

EP 89 40 0792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 063 083 (CEA) <br> * Résumé * <br> --- | 1,3,8 | H 01 J 47/02 <br> A 61 B 6/03 |
| A | US-A-4 559 639 (G.H. GLOVER et al.) <br> --- | | |
| A | US-A-4 047 039 (J.M. HOUSTON) <br> ----- | | |

|  |
|---|
| **DOMAINES TECHNIQUES RECHERCHES (Int. Cl.4)** |
| H 01 J 47/00& |

Le présent rapport a été établi pour toutes les revendications

| Lieu de la recherche | Date d'achèvement de la recherche | Examinateur |
|---|---|---|
| LA HAYE | 26-06-1989 | SCHAUB G.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................

& : membre de la même famille, document correspondant

EPO FORM 1503 03.82 (P0402)